(19) Europäisches Patentamt

European Patent Office

Office européen des brevets

(11) **EP 0 836 072 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(51) Int Cl.[7]: **G01B 7/30**, G01D 5/16, G01D 5/251

(21) Anmeldenummer: **97116039.5**

(22) Anmeldetag: **16.09.1997**

(54) **Drehgeber**

Rotation sensor

Capteur de rotation

(84) Benannte Vertragsstaaten:
**CH DE FR IT LI SE**

(30) Priorität: **11.10.1996 CH 247896**

(43) Veröffentlichungstag der Anmeldung:
**15.04.1998 Patentblatt 1998/16**

(73) Patentinhaber: **HERA Rotterdam B.V.**
**3062 MA Rotterdam (NL)**

(72) Erfinder:
• **Schneider, S.M.O.L.**
  **8537 Nussbaumen (CH)**
• **Kempter, Sébastien Albin**
  **1860 Aigle (CH)**

(74) Vertreter: **Frei, Alexandra Sarah et al**
**Frei Patentanwaltsbüro**
**Postfach 768**
**8029 Zürich (CH)**

(56) Entgegenhaltungen:
EP-A- 0 272 544        DE-A- 4 038 674
DE-A- 4 440 214        US-A- 3 686 507

• **PATENT ABSTRACTS OF JAPAN vol. 12, no. 51 (P-667), 16.Februar 1988 & JP 62 198714 A (YASKAWA ELECTRIC MFG CO LTD), 2.September 1987,**

**Beschreibung**

Die Erfindung betrifft einen Drehgeber und ein Verfahren zu seiner Herstellung gemäss den Oberbegriffen der unabhängigen Patentansprüche.

In der Robotik und im Maschinenbau der Automatisierungstechnik werden an den angetriebenen Achsen Motoren unterschiedlichster Grösse eingesetzt. Dabei benötigen die Motoren einen oder mehrere Sensoren zur Erkennung der Rotorlage, -geschwindigkeit, -position und Anzahl erreichter Rotorumdrehungen. Je nach Art des benützten Motors werden zur korrekten Schliessung des Regelkreises mehrere Arten von Sensoren für die Messung der obigen physikalischen Grössen eingesetzt.

So werden z. B. für den Betrieb eines Motors mit Blockkommutierung drei zu justierende Hall-Elemente mit rotierendem Permanentmagnetrad eingesetzt. Damit lässt sich zwar der Motor kommutieren und antreiben; um aber die Achse geregelt positionieren zu können, muss ein weiterer Sensor, z. B. ein optischer Drehgeber, mechanisch angeschlossen werden. Bei Sinuskommutierung wird u. a. ein induktiver Drehgeber (Resolver) eingesetzt. Dieser erzeugt - mit entsprechender elektronischer Auswertung - die Kommutier- und Positioniersignale; um aber die Anzahl Rotorumdrehungen zu messen und ausfallsicher zu speichern, benötigt die Antriebswelle zusätzliche Sensoren mit mechanischen Anbauten.

Solche zusätzlichen mechanischen Aufbauten benötigen mehr Platz. Die Patentschrift EP-0 272 544 B1 versucht, diesen Nachteil zu eliminieren und einen baulich möglichst kompakten Winkellagegeber zu schaffen, indem ein umlaufender Magnet auf der Geberwelle zwischen den Wälzlagern angeordnet wird. Dieser Magnet wirkt bei jeder Umdrehung auf einen im Lagergehäuse angeordneten Magnetfeldsensor, dessen Impulse an einen Umdrehungszähler geliefert und aufsummiert werden. Eine fotoelektrisch abtastbare Geberscheibe am Ende der Geberwelle wird für die eigentliche Winkelfeinauflösung gebraucht. Obwohl dieser Winkellagegeber Platz spart, weist auch er Nachteile auf, die auch typisch für andere bekannte Drehgeber sind. Wegen des Magneten, der mechanisch an die rotierende Geberwelle angebaut werden muss, werden mehr Montageteile und eine aufwendigere Montage mit längerer Montagezeit benötigt. Dies schlägt sich auch in grösseren Kosten nieder.

Weitere, subtilere Nachteile des Stands der Technik ergeben sich durch die Tatsache, dass jeglicher Einsatz gemischter Technologien höhere Anforderungen an den Anwender stellt. So sind bspw. bei Hall-Element-Sensoren gänzlich andere Einsatzspezifikationen zu beachten als bei optischen Drehgebern, Resolvern oder bei Multiturn-Gebern mit mechanischen Getrieben.

Die deutschen Offenlegungsschriften DE 40 38 674 und DE 44 40 214 zeigen Drehgeber mit einem hochauflösenden und einem niedrigauflösenden Sensor. Die Sensoren weisen je einen oder mehrere Permanentmagneten sowie eine Hall-Sonde bzw. eine Feldplatte zum Messen des von diesen erzeugten Magnetfelds in Abhängigkeit der relativen Position auf.

Der Erfindung liegt die Aufgabe zugrunde, einen Drehgeber zu schaffen und ein Verfahren zu seiner Herstellung anzugeben, welche die genannten Nachteile des Standes der Technik überwindet.

Die Aufgabe wird gelöst durch den erfindungsgemässen magnetischen Drehgeber und das erfindungsgemässe Herstellungsverfahren, wie sie in den unabhängigen Patentansprüchen definiert sind.

Der erfindungsgemässe Drehgeber beruht ausschliesslich auf Permanentmagnet-Technologie. Er enthält einen hochauflösenden Sensor und einen niedrigauflösenden Sensor, die je mindestens einen Permanentmagneten beinhalten. Der hochauflösende Sensor liefert Signale, anhand welcher sich die Winkellage einer Geberwelle genau, aber nicht absolut bestimmen lässt, z. B. genauer als 360°/n, wobei n = 1, 2, ... eine natürliche Zahl ist, die für einen bestimmten Sensortyp fest ist. Der niedrigauflösende Sensor liefert Signale, aufgrund derer die absolute Winkellage der Geberwelle bestimmbar ist, allerdings unter Umständen mit einer niedrigeren Genauigkeit, z. B. mit einer Genauigkeit von ca. 360°/n. Diese Absolutbestimmung beinhaltet vorzugsweise auch das Zählen von Umdrehungen der Welle. Der Erfindungsgemässe Drehgeber ist mit Mitteln zur Auswertung der Sensorsignale ausgestattet.

Die Komponenten des hochauflösenden und des niedrigauflösenden Sensors sind in zwei zueinander parallelen Ebenen angeordnet. Ortsfeste Sensorkomponenten sind auf einer ortsfesten Montageplatte und drehbare Sensorkomponenen auf einer mit der Geberwelle verbundenen und drehbaren Massverkörperung angeordnet.

Der hochauflösende Sensor des erfindungsgemässen Drehgebers ist ein Winkellagesensor auf Permanentmagnet-Basis, dessen Ausgangssignal die Winkellage der Geberwelle zwar mit grosser Genauigkeit, aber modulo 360°/n angibt. Er ist vorzugsweise als magnetoresistiver Wandler auf der Montageplatte ausgebildet, welcher mit einem auf der Massverkörperung angebrachten Permanentmagneten zusammenwirkt. Ein solcher hochauflösender Sensor liefert bspw. ein Sinus- und/oder ein Cosinus-Signal der Periode 180°. Dies entspricht einer halben Wellenumdrehung, d. h. in diesem Beispiel ist n = 2.

Der niedrigauflösende Sensor des erfindungsgemässen Drehgebers liefert bspw. pro Wellenumdrehung mindestens n verschiedene Ausgangssignale, anhand derer die n gleichen Ausgangssignale des hochauflösenden Sensors unterscheidbar sind und der Drehwinkel somit absolut messbar ist. Er kann bspw. als mindestens ein Schalter mit n Schaltzuständen oder mindestens n Schalter mit zwei Schaltzuständen ausgebildet sein. Die Schaltimpulse des niedrigauflösenden Sensors können an einen Umdrehungszähler geliefert und aufsummiert werden. Der niedrigauflösende Sensor ist als Reed-Relais ausgebildet. Das mindestens eine Reed-Relais kann bspw. von einer halbringförmigen magnetischen Blende auf der Massverkörperung geschaltet werden. Der Zustand des Reed-Relais (offen/geschlossen) erlaubt die Unterscheidung der bspw. zwei (n = 2) Perioden des hochauflösenden Sensors innerhalb einer vollen Wellenumdrehung.

Dank der konsequenten Verwendung der Permanentmagnet-Technologie braucht der erfindungsgemässe Drehgeber keine eigene Lagerung. Die Lesedistanzen zur Massverkörperung sind nämlich bei Permanentmagnet-Sensoren gross (typischerweise 0.25 mm bis 1.25 mm) im Vergleich mit optischen Sensoren (typischerweise 0.05 bis 0.125 mm). Verglichen mit Hall-Effekt-Sensoren ist der erfindungsgemässe Drehgeber ca. 10mal unempfindlicher gegen Montagetoleranzen, weil er im Fernfeld betrieben wird.

Die ausschliessliche Verwendung von passiven Magnetsensoren im erfindungsgemässen Drehgeber hat erstens den Vorteil, dass die Produktionstoleranzen nicht von den Magneteigenschaften, sondern nur von gut beherrschbaren mechanisch gefertigten Teilen abhängen. Zweitens ist die Stromaufnahme des niedrigauflösenden Sensors ausserordentlich gering, typischerweise 10- bis 100mal kleiner als bei Hall-Element-Sensoren, optischen Drehgebern oder Resolvern. Diese kleine Stromaufnahme ermöglicht es, einen Zähler mit der Anzahl Wellenumdrehungen zu beschicken und die Summe stromausfallsicher zu speichern. Ein weiterer Vorteil des erfindungsgemässen Drehgebers besteht darin, dass er berührungsfrei funktioniert: Zwischen der ortsfesten Montageplatte und der drehbaren Massverkörperung ist weder ein mechanischer noch ein elektrischer Kontakt nötig.

Falls der Drehgeber einen anwendungsspezifischen integrierten Schaltkreis (ASIC) benützt, kann dieser dank der kleinen Abmessungen der Permanentmagnet-Sensoren direkt im Motor eingebaut werden.

Die Herstellung des erfindungsgemässen Drehgebers ist besonders einfach, weil der Drehgeber keine mechanisch zu montierenden Teile beihaltet. Die Massverkörperung kann als Kunststoffspritzeil mit Einlegeteilen wie Stabmagnet und magnetische Blende ausgeführt sein. Die Montageplatte, die vorzugsweise als Leiterplatte mit Permanentmagnet-Sensoren, minimaler Elektronik und Mitteln zur Auswertung der Sensorsignale ausgebildet ist, kann gänzlich in Chip-on-board-Technik (COB) oder in Surface-mounted-device-Technik (SMD) bestückt werden. Das bedeutet, dass sich der erfindungsgemässe Drehgeber auf bestehenden Bestückungsmaschinen mit hoher Leistung herstellen lässt und nicht hand- oder robotermontiert werden muss.

Eine bevorzugte Ausführungsform des erfindungsgemässen Drehgebers wird im folgenden anhand der Figuren detailliert beschrieben. Dabei zeigen:

Fig. 1   eine schematische Explosionszeichnung eines erfindungsgemässen Drehgebers,

Fig. 2   eine Draufsicht auf eine Massverkörperung und eine daneben liegende Montageplatte mit den wesentlichen Sensorkomponenten des erfindungsgemässen Drehgebers,

Fig. 3   eine Draufsicht auf die wesentlichen Sensorkomponenten des erfindunsgemässen Drehgebers in betriebsbereitem Zustand und

Fig. 4   Ausgangssignale von Sensoren des erfindungsgemässen Drehgebers.

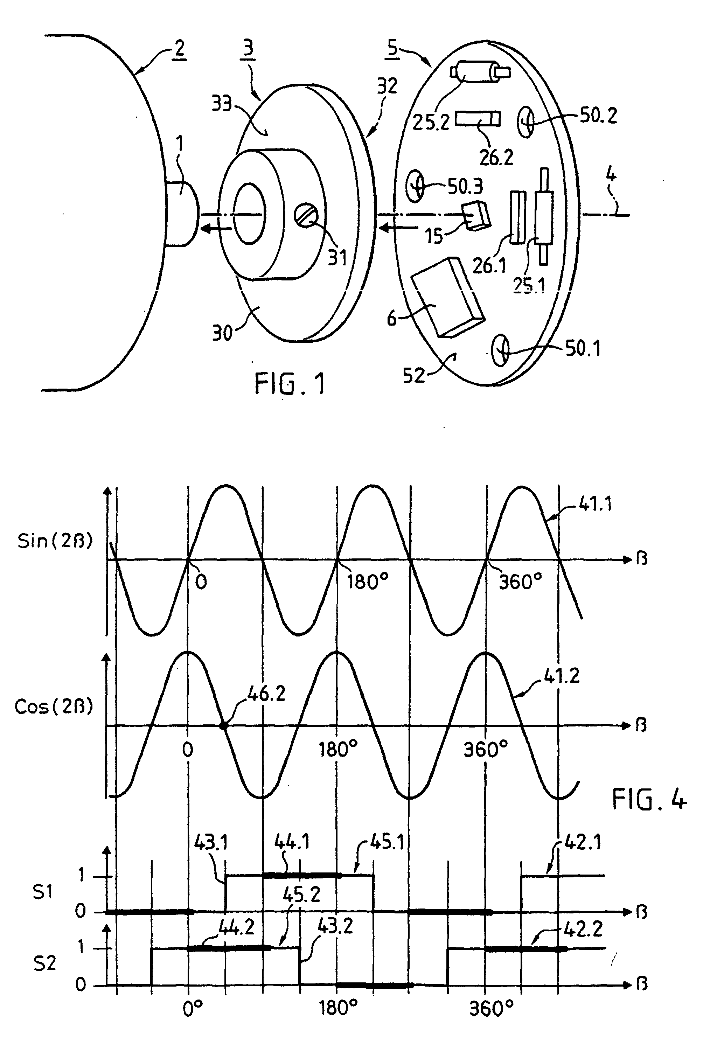

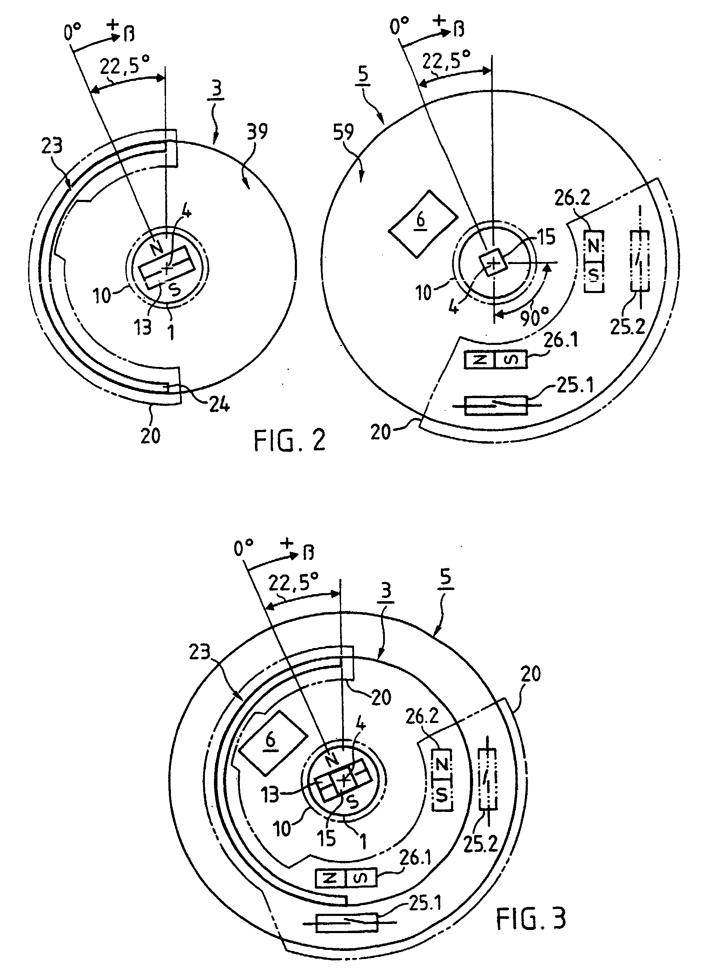

**Figur 1** zeigt eine schematische Explosionszeichnung einer bevorzugten Ausführungsform des erfindungsgemässen Drehgebers. Eine Geberwelle 1 wird von einem Motor 2 angetrieben. Am Ende der Geberwelle 1 ist eine Massverkörperung 3 angebracht, welche mit der Geberwelle 1 verbunden und drehbar ist. Der Grundkörper der Massverkörperung 3 ist bspw. als Scheibe 30 ausgebildet, welche mit mindestens einer Schraube 31 an der Geberwelle 1 befestigt ist. Die dem Motor 2 abgewandte Fläche der Scheibe 30 definiert eine erste Ebene 32, welche senkrecht zur Rotationsachse 4 der Geberwelle 1 steht. In dieser ersten Ebene 32 sind bewegliche Sensorkomponenten angebracht, die in Fig. 1 nicht sichtbar sind und anhand der Fig. 2 erläutert werden. In einer anderen, hier nicht dargestellten Ausführungsform können Sensorkomponenten auch auf der dem Motor 2 zugewandten Fläche 33 der Massverkörperung 3 angebracht sein.

In einer zweiten Ebene 52, welche parallel zur ersten Ebene 32 liegt, sind ortsfeste Sensorkomponenten 15, 25.1, 25.2, 26.1, 26.2 angebracht. Die zweite Ebene 52 wird vorzugsweise durch eine ortsfeste, nicht mit der Geberwelle 1 verbundene Montageplatte 5 definiert. Im betriebsbereiten Zustand sind die Massverkörperung 3 und die Montageplatte 5 parallel zueinander angeordnet und liegen so nahe beieinander, dass ein Zusammenwirken der beweglichen Sensorkomponenten mit den ortsfesten Sensorkomponenten 15, 25.1, 25.2, 26.1, 26.2 zwecks erfassung der Winkellage der Geberwelle 1 erzielbar ist; ein typischer Arbeitsabstand beträgt 0.25 mm bis 1.25 mm. Die Montageplatte 5 ist vorzugsweise als Leiterplatte ausgebildet, auf welche die ortsfesten Sensorkomponenten 15, 25.1, 25.2, 26.1, 262 und wahlweise (der Übersichtlichkeit halber nicht dargestellte) elektronische Bauteile montiert sind. Auf der Montageplatte 5 können auch Mittel 6 zur Auswertung der Sensorsignale angebracht sein. Die Bestückung der Montageplatte 5 kann gänzlich in Chip-on-board-Technik (COB) oder in Surface-mounted-device-Technik (SMD) ausgeführt werden. Die Montageplatte 5 ist an einem (nicht dargestellten) festen Maschinenteil befestigt, wozu bspw. Befestigungslöcher 50.1-50.3 dienen.

**Figur 2** zeigt schematisch Sensorkomponenten einer bevorzugten Ausführungsform des erfindungsgemässen Drehgebers. Der Übersichtlichkeit halber sind hier die Massverkörperung 3 und die Montageplatte 5 nebeneinander gezeichnet und nicht übereinander, wie es dem betriebsbereiten Zustand entsprechen würde. In der linken Figurenhälfte ist die Massverkörperung 3 dargestellt, in der rechten Figurenhälfte die Montageplatte 5. Die beweglichen Sensorkomponenten 13, 23 auf der Massverkörperung 3 sind dem Betrachter abgewandt und wären eigentlich nicht sichtbar; der Klarheit der Darstellung zuliebe sind sie eingezeichnet, als wären sie sichtbar, d. h. als wäre die Massverkörperung 3 durchsichtig.

Der erfindungsgemässe Drehgeber enthält einen hochauflösenden Sensor 10 und einen niedrigauflösenden Sensor 20. Der hochauflösende Sensor 10 ist in dieser Ausführungsform im Bereich der Rotationsachse 4 angebracht. Er besteht im wesentlichen aus einem magnetoresistiven Wandler 15 auf der Montageplatte 5 und einem Permanentmagneten 13 auf der Massverkörperung 3. Die Lagen dieser beiden Sensorkomponenten 13, 15 könnten auch vertauscht sein. In einer verfeinerten Ausführungsform können mehr als ein magnetoresistiver Wandler 15 und/oder mehr als ein Permanentmagnet 13 eingebaut sein. Auch Permanentmagnet-Sensoren, die nicht auf dem magnetoresistiven Prinzip beruhen, können erfindungsgemäss als hochauflösende Sensoren 10 eingesetzt werden.

Der niedrigauflösende Sensor 20 ist in dieser Ausführungsform im äusseren Bereich 39 der Massverkörperung 3 bzw. im äusseren Bereich 59 der Montageplatte 5 angebracht. Er besteht in dieser Ausführungsform aus zwei Reed-Relais 25.1, 25.2 mit je einem radial zur Rotationsachse 4 hin versetzten Permanentmagneten 26.1, 26.2 auf der Montageplatte 5 sowie aus einer halbringförmigen magnetischen Blende 23 auf der Massverkörperung 3. Die Reed-Relais 25.1, 25.2 weisen denselben Abstand von der Rotationsachse 4 auf und schliessen bezüglich der Rotationsachse 4 einen rechten Winkel ein. Die magnetische Blende 23 besteht aus einem Material mit hoher magnetischer Permeabilität, bspw. Eisen oder Nickel, und ist als Halbring ausgebildet. Es ist von Vorteil für die Auswertung der Sensorsignale, wenn der hochauflösende Sensor 10 gegenüber dem niedrigauflösenden Sensor 20 um 22.5° gedreht angeordnet ist, so wie in Fig. 2 und 3 gezeichnet. Selbstverständlich könnten die Reed-Relais 25.1, 25.2 auch innen und die Permanentmagneten 26.1, 26.2 aussen angeordnet sein. Die Reed-Relais 25.1, 25.2 und die dazugehörigen Permanentmagnete 26.1, 262 könnten auch auf der Massverkörperung 3 und die magnetische Blende 23 auf der Montageplatte 5 angebracht sein.

Ein einziges Reed-Relais 25.1 würde zum Funktionieren des erfindungsgemässen Drehgebers genügen; das zweite Reed-Relais 25.2 mit dem zweiten Permanentmagneten 26.2 sind fakultativ. In einer anderen, hier nicht dargestellten Ausführungsform könnten mehr als zwei Reed-Relais 25.1, 25.2, ..., 25.j mit ebensovielen Permanentmagneten 26.1, 26.2, ..., 26.j auf der Montageplatte 5 angebracht sein. In einer weiteren, hier nicht dargestellten Ausführungsform könnte auf die Permanentmagnete 26.1, 26.2 verzichtet werden, dafür müssten statt der magnetischen Blende 23 ein oder mehrere Permanentmagnete auf der Massverkörperung 3 angebracht sein.

Vorzugsweise auf der Montageplatte 5 sind Mittel 6 zur Auswertung der Sensorsignale angebracht.

Anhand von **Figur 3** wird das Zusammenwirken der wesentlichen Sensorkomponenten 13 mit 15 sowie 23 mit 25.1, 26.1 bzw. 25.2, 26.2 beschrieben. Die Fig. 3 zeigt die wesentlichen Sensorkomponenten 13, 15, 23, 25.1, 25.2, 26.1, 26.2 in der gleichen Draufsicht wie Fig. 2, doch sind nun die Massverkörperung 3 und die Montageplatte 5 nicht nebeneinander, sondern übereinander gezeichnet, wie dies im betriebsbereiten Zustand der Fall ist. Die wesentlichen Komponenten des hochauflösenden Sensors 10 und des niedrigauflösenden Sensors 20 sind also in zwei zueinander parallelen, in Fig. 3 nicht unterscheidbaren Ebenen 32, 52 angeordnet; die erste Ebene 32 ist durch die Massverkörperung 3, die zweite Ebene 52 durch die Montageplatte 5 definiert.

Die Messung der Winkellage der Geberwelle 1 durch den hochauflösenden Sensor 10 beruht darauf, dass das Magnetfeld des Permanentmagneten 13 auf der Massverkörperung 3 von der Winkellage der Geberwelle 1 abhängig ist. Der mindestens eine magnetoresistive Wandler 15 auf der Montageplatte 5 misst dieses Magnetfeld oder seine Änderungen. Enthält der hochauflösende Sensor 10 mehrere magnetoresistive Wandler, so können diese auch zu einer Messbrücke zusammengeschaltet werden. Ein solcher hochauflösender Sensor liefert bspw. ein Sinussignal 41.1 und ein Cosinussignal 41.2 mit einer Periode von je 180°, wie sie im oberen Teil von Fig. 4 dargestellt sind.

Der niedrigauflösende Sensor 20 besteht in diesem Ausführungsbeispiel aus zwei Reed-Relais 25.1, 25.2 in den Magnetfeldern von je einem Permanentmagneten 26.1, 26.2. Wenn sich die magnetische Blende 23 aus einem Material mit hoher magnetischer Permeabilität zwischen einem Reed-Relais 25.1 und dem entsprechenden Permanentmagneten 26.1 befindet, ist das Magnetfeld unterbrochen und dringt nicht bis zum Reed-Relais 25.1 vor. Wird die magnetische Blende 23 gedreht, so schalten die Reed-Relais 25.1, 25.2 ein und aus und liefern binäre Signale 42.1, 42.2, wie sie im unteren Teil von Fig. 4 dargestellt sind. Aus den Schaltzuständen der Reed-Relais 25.1, 25.2 lässt sich die Zweideutigkeit der Signale 41.1, 41.2 des hochauflösenden Sensors 10 beheben.

Der niedrigauflösende Sensor 20 liesse sich auch einfacher gestalten als in Fig. 3. Eine erste einfachere Ausführungsform käme mit nur einem Reed-Relais 25.1 aus. Dabei ergäben sich jedoch Unsicherheiten in derjenigen Winkellage, in der sich ein Ende 24 der magnetischen Blende 23 im Magnetfeld zwischen dem Permanentmagneten 26.1 und dem Reed-Relais 25.1 befindet. Um in diesem Fall einen exakt definierten Schaltpunkt zu erzielen, müssten der hochauflösende Sensor 10 und der niedrigauflösende Sensor 20 bei der Montage exakt aufeinander positioniert werden. Dieser Nachteil wird in der in Fig. 3 dargestellten Ausführungsform mit zwei Reed-Relais 25.1, 25.2 behoben, indem das zweite Reed-Relais 25.2 jeweils auch dann eine eindeutige Information liefert, wenn der Schaltzustand des ersten Reed-Relais 25.1 unsicher ist. Es können auch mehr als zwei Reed-Relais 25.1, 25.2, ..., 25.j mit Permanentmagneten 26.1, 26.2, ..., 26.j eingesetzt werden.

In einer zweiten einfacheren, hier nicht dargestellten Ausführungsform des niedrigauflösenden Sensors 20 kann die Massverkörperung 3 statt der magnetischen Blende 32 einen oder mehrere Permanentmagnete enthalten. Auf der Montageplatte 5 genügt dann mindestens ein Reed-Relais 25.1 ohne Permanentmagnete. Diese Ausführungsform hat den Nachteil, dass das Magnetfeld eines sich bewegenden Magneten nicht exakt beherrschbar ist, wodurch sich wiederum Messunsicherheiten ergäben.

**Figur 4** zeigt ein Beispiel von Ausgangssignalen 41.1, 41.2, 42.1, 42.2 der Sensoren 10, 20 des in Fig. 3 dargestellten erfindungsgemässen Drehgebers in Abhängigkeit von der Winkellage $\beta$. Dabei entspricht der Winkel $\beta$ = 360° einer vollen Umdrehung der Geberwelle 1.

Der hochauflösende Sensor 10 liefert das im oberen Teil der Fig. 4 dargestellte Sinussignal 41.1 sin(2$\beta$) und Cosinussignal 41.2 cos(2$\beta$), welche je die Periode von 180° haben. Ein einziges dieser beiden Signale 41.1, 41.2, bspw. das Sinussignal 41.1, würde auch schon Information über die Winkellage $\beta$ beinhalten. An den Extremalstellen der Kurve 41.1, d. h. bei $\beta$ = 45°, 135° etc., liesse sich jedoch die Winkellage $\beta$ nur sehr ungenau aus dem einzigen Signal 41.1 bestimmen. Deshalb ist es vorteilhaft, ein zweites Signal in Quadratur, bspw. das Cosinussignal 41.2, beizuziehen, welches an den Extremalstellen des ersten Signals 41.1 Ableitungen mit grossem Absolutbetrag aufweist.

Mit den zwei Signalen 41.1, 412 des hochauflösenden Sensors 10, die in Quadratur sind, lässt sich die Winkellage $\beta$ zwar mit grosser Genauigkeit bestimmen, aber nur modulo 180°. Für eine eindeutige Absolutbestimmung der Winkellage $\beta$ werden die im unteren Teil der Fig. 4 dargestellten Signale 42.1, 42.2 des niedrigauflösenden Sensors 20 benötigt, bspw. ein erstes Signal S1 des ersten Reed-Relais 25.1 und ein zweites Signal S2 des zweiten Reed-Relais 25.2. Entsprechend den beiden Schaltzuständen "offen" bzw. "geschlossen" eines Reed-Relais können die Signale bloss die zwei Werte 0 bzw. 1 annehmen. Ein einziges dieser beiden Signale 42.1, 42.2 würde eigentlich genügend Information liefern, mit deren Hilfe die Winkellage $\beta$ absolut bestimmbar wäre. Aus den anlässlich der Fig. 3 genannten physikalischen Gründen und zur einfacheren mathematischen Auswertung sind jedoch zwei Signale 42.1, 42.2 vorteilhaft.

Aus den Sensor-Ausgangssignalen 41.1, 41.2, 42.1, 42.2 lässt sich die absolute Winkellage $\beta$ bspw. wie folgt berechnen. Aus den beiden Signalen sin(2$\beta$) 41.1, cos (2$\beta$) 41.2 des hochauflösenden Sensors 10 wird ein Winkel

$$\alpha = \arctan[\sin(2\beta)/\cos(2\beta)]$$

berechnet. Die absolute Winkellage ergibt sich aus

$$\beta = \alpha/2 + 180° \cdot NOT(S2) , \qquad \text{falls } \sin(2\beta) \geq 0 \text{ und } \cos(2\beta) \geq 0$$

$$\beta = \alpha/2 - 90° + 180° \cdot NOT(S2) , \qquad \text{falls } \sin(2\beta) \geq 0 \text{ und } \cos(2\beta) < 0$$

$$\beta = \alpha/2 + 90° + 180° \cdot NOT(S1) , \qquad \text{falls } \sin(2\beta) < 0 \text{ und } \cos(2\beta) \leq 0$$

$$\beta = \alpha/2 + 180° \cdot NOT(S1) , \qquad \text{falls } \sin(2\beta) < 0 \text{ und } \cos(2\beta) > 0.$$

Diese Auswertmethode hat den Vorteil, dass sie unkritisch gegenüber Montagetoleranzen ist. Es werden nämlich nie Flanken 43.1, 43.2 der Signale 42.1, 42.2 des niedrigauflösenden Sensors 20 benützt, sondern immer nur Bereiche 44.1, 44.2, die jeweils vollständig innerhalb eines Signalplateaus 45.1, 45.2 liegen. Deshalb spielt es keine Rolle, wenn der niedrigauflösende Sensor 20 mit einem kleinen Winkelfehler bezüglich des hochauflösenden Sensors 10 montiert ist, so dass eine Flanke 43.1 eines Signals 42.1 des niedrigauflösenden Sensors 20 nicht exakt mit einer Nullstelle 46.2 eines Signals des hochauflösenden Sensors 10 übereinstimmt.

Die Schaltimpulse des niedrigauflösenden Sensors 20 können an einen Umdrehungszähler, welcher in den Mitteln 6 zur Signalauswertung enthalten sein kann, geliefert und von diesem aufsummiert werden.

**Patentansprüche**

1. Drehgeber zur Bestimmung der absoluten Winkellage (β) einer um eine Rotationsachse (4) rotierbaren Geberwelle (1), mit mindestens einem ersten Sensor (10) zur Bestimmung der Winkellage der Geberwelle (1) mit einer ersten Auflösung, mit mindestens einem zweiten Sensor (20) zur Bestimmung der Winkellage der Geberwelle (1) mit einer zweiten Auflösung, welche geringer ist als die erste Auflösung, und mit Mitteln (6) zur Auswertung von Ausgangssignalen des ersten Sensors (10) und des zweiten Sensors (20), wobei sowohl der erste Sensor (10) als auch der zweite Sensor (20) Mittel besitzen, durch Ermittlung eines von Permanentmagneten (13, 26.1, 26.2) erzeugten Magnetfelds die Winkellage (β) der Geberwelle (1) zu erfassen, wobei bewegliche Komponenten (13, 23) sowohl des ersten Sensors (10) als auch des zweiten Sensors (20) auf einer einzigen an der Geberwelle (1) befestigten und drehbaren Massverkörperung (3) und in einer ersten, zur Rotationsachse (4) senkrechten Ebene angeordnet sind, und wobei ortsfeste Komponenten (15, 25.1, 25.2, 26.1, 26.2) des ersten Sensors (10) und des zweiten Sensors (20) auf einer ortsfesten Montageplatte (5) und in einer zweiten zur Rotationsachse (4) senkrechten und in axialer Richtung von der ersten Ebene beabstandeten zweiten Ebene angeordnet sind, **dadurch gekennzeichnet, dass,** sowohl der erste Sensor (10) als auch der zweite Sensor (20) je mindestens einen Permanentmagneten (13, 26.1, 26.2) beinhalten, dass der zweite Sensor (20) mindestens ein Reed-Relais (25.1, 25.2) enthält und die ortsfesten Komponenten (25.1, 25.2, 26.1, 26.2) des zweiten Sensor auf der Montageplatte (5) angeordnet und in axialer Richtung von den beweglichen Komponenten (23) beabstandet sind, und dass der erste Sensor im Bereich der Rotationsachse angebracht ist und genau einen Permanentmagneten (13) aufweist und der zweite Sensor in einem äusseren Bereich der Massverkörperung bzw. der Montageplatte angebracht ist .

2. Drehgeber nach Anspruch 1, **dadurch gekennzeichnet, dass** die Massverkörperung (3) als Scheibe (30) ausgebildet ist, wobei die Massverkörperung (3) und die Montageplatte (5) so nahe beieinander liegen, dass ein Zusammenwirken der beweglichen Sensorkomponenten (13, 23) mit den ortsfesten Sensorkomponenten (15, 25.1, 25.2, 26.1, 26.2) zwecks Erfassung der Winkellage (β) der Geberwelle (1) erzielbar ist.

3. Drehgeber nach Anspruch 2, **dadurch gekennzeichnet, dass** die Montageplatte (5) eine Leiterplatte ist, welche mit Sensorkomponenten (15, 25.1, 25.2, 26.1, 26.2) und Mitteln (6) zur Auswertung der Sensorsignale bestückt ist.

4. Drehgeber nach Anspruch 1, **dadurch gekennzeichnet, dass** das mindestens eine Reed-Relais (25.1, 25.2) im Magnetfeld mindestens eines Permanentmagneten (26.1, 26.2) auf der Montageplatte (5) angeordnet ist und dieses Magnetfeld durch eine auf der Massverkörperung (3) angeordnete magnetische Blende (23) unterbrechbar ist.

5. Drehgeber nach Anspruch 4, **dadurch gekennzeichnet, dass** zwei Reed-Relais (25.1, 25.2) im Feld von je einem Permanentmagneten (26.1, 26.2) auf der Montageplatte (5) angeordnet sind, wobei beide Reed-Relais (25.1, 25.2) denselben Abstand von der Rotationsachse (4) aufweisen und bezüglich der Rotationsachse (4) einen rechten Winkel einschliessen.

6. Drehgeber nach Anspruch 4 oder 5, **dadurch gekennzeichnet, dass** die magnetische Blende (23) als Halbring aus einem Material mit derart grosser magnetischer Permeabilität ausgebildet ist, dass die Blende (23) das Magnetfeld des mindestens einen Permanentmagneten (26.1, 26.2) gegenüber dem mindestens einen Reed-Relais (25.1, 25.2) unterbricht.

7. Drehgeber nach einem der Ansprüche 1-6, **gekennzeichnet durch** einen Umdrehungszähler, mit dem vom zweiten Sensor gelieferte Impulse aufsummierbar sind.

8. Verfahren zur Herstellung eines Drehgebers nach Anspruch 3, **dadurch gekennzeichnet, dass** die Leiterplatte (5) in Chip-on-board-Technik oder in Surface-mounted-device-Technik bestückt wird.

**Claims**

1. A rotation sensor for determining the absolute angular position (β) of a sensor shaft (11) rotatable about a rotation axis (4), with at least one first sensor (10) for determining the angular position of the sensor shaft (1) with a first resolution, with at least one second sensor (20) for determining the angular position of the sensor shaft (1) with a second resolution which is smaller than the first resolution, and with means (6) for evaluation of output signals of the first sensor (10) and of the second sensor (20), wherein the first sensor (10) as well as the second sensor (20) have means to detect the angular position (β) of the sensor shaft (1) by way of determining a magnetic field produced by permanent magnets (13, 26.1, 26.2), wherein movable components (13, 23) of the first sensor (10) as well as of the second sensor (20) are arranged on a single scale embodiment (3) fastened and rotatable on the sensor shaft (1), and in a first plane perpendicular to the rotation axis (4), and wherein stationary components (15, 25.1, 25.2. 26.1. 26.2) of the first sensor (10) and of the second sensor (20) are arranged on a stationary assembly plate (5) and in a second plane which is perpendicular to the rotation axis (4) and is distanced in the axial direction from the first plane, **characterised in that** the first sensor (10) as well as the second sensor (20) in each case contain at least one permanent magnet (13, 26.1, 26.2), that the second sensor (20) contains at least one reed relay (25.1, 25.2) and the stationary components (25.1, 25.2, 26.1, 26.2) of the second sensor are arranged on the assembly plate (5) and in the axial direction are distanced from the movable components (23), and that the first sensor is attached in the region of the rotation axis and comprises exactly one permanent magnet (13) and the second sensor is attached in an outer region of the scale embodiment or the assembly plate.

2. A rotation sensor according to claim 1, **characterised in that** the scale embodiment (3) is formed as a disk (30), wherein the scale embodiment (3) and the assembly plate (5) lie so close to one another that a cooperation of the movable sensor components (13, 23) with the stationary sensor components (15, 25.1, 25.2, 26.1, 26.2) may be achieved for the propose of detecting the angular position (β) of the sensor shaft (1).

3. A rotation sensor according to claim 2, **characterised in that** the assembly plate (5) is a printed circuit board which is equipped with sensor components (15, 25.1, 25.2, 26.1, 26.2) and means (6) for evaluating the sensor signals.

4. A rotation sensor according to claim 1, **characterised in that** the at least one reed relay (25.1, 25.2) is arranged on the assembly plate (5) in the magnetic field at least of one permanent magnet (26.1, 26.2) and this magnetic field may be interrupted by a magnetic screen (23) arranged on the scale embodiment (3).

5. A rotation sensor according to claim 4, **characterised in that** two reed relays (25.1, 25.2) are arranged in the field of in each case one permanent magnet (26.1, 26.2) on the assembly plate (5), wherein both reed relays (25.1, 25.2) have the same distance to the rotational axis (4) and enclose a right angle with respect to the rotation axis (4).

6. A rotation sensor according to claim 4 or 5, **characterised in that** the magnetic screen (23) is formed as a semi-ring of a material having such a large magnetic permeability that the screen (23) interrupts the magnetic field of the at least one permanent magnet (26.1, 26.2) with respect to the at least one reed relay (25.1, 25.2).

7. A rotation sensor according to one of the claims 1-6, **characterised by** a revolution sensor with which impulses provided by the second sensor may be summed up.

8. A method for manufacturing a rotation sensor according to claim 3, **characterised in that** the circuit board (5) is equipped using chip-on-board technology or surface-mounted-device technology.

**Revendications**

1. Capteur de rotation pour la détermination de la position angulaire absolue (β) d'un arbre de capteur (1) pouvant tourner autour d'un axe de rotation (4), avec au moins un premier détecteur (10) pour déterminer la position angulaire de l'arbre de capteur (1) avec une première résolution, avec au moins un second détecteur (20) pour déterminer la position angulaire de l'arbre de capteur (1) avec une deuxième résolution inférieure à la première résolution, et avec des moyens (6) pour interpréter les signaux de sortie du premier détecteur (10) et du second détecteur (20), dans lequel le premier détecteur (10) et le second détecteur (20) possèdent des moyens pour détecter la position angulaire (β) de l'arbre de capteur (1) par la détermination d'un champ magnétique produit par des aimants permanents (13, 26.1, 26.2), dans lequel des composants mobiles (13, 23) du premier détecteur (10) et du second détecteur (20) sont disposés sur une mesure matérialisée(3) fixée à l'arbre de capteur (1) et rotative et dans un premier plan perpendiculaire à l'axe de rotation (4), et dans lequel des composants fixes (15, 25.1, 25.2, 26.1, 26.2) du premier détecteur (10) et du second détecteur (20) sont disposés sur une plaque de montage (5) fixe et dans un second plan perpendiculaire à l'axe de rotation (4) et distant du premier plan dans le sens axial, **caractérisé en ce que** le premier détecteur (10) et le second détecteur (20) possèdent chacun au moins un aimant permanent (13, 26.1, 26.2), **en ce que** le second détecteur (20) contient au moins un relais à lames souples (25.1, 25.2) et les composants fixes (25.1, 25.2, 26.1, 26.2) du second détecteur sont disposés sur la plaque de montage (5) et distants dans le sens axial des composants mobiles (23), et **en ce que** le premier détecteur est disposé au niveau de l'axe de rotation et présente exactement un aimant permanent (13) et le second détecteur est disposé dans une zone extérieure de la mesure matérialisée ou de la plaque de montage.

2. Capteur de rotation selon la revendication 1, **caractérisé en ce que** la mesure matérialisée (3) est conformée comme un disque (30), la mesure matérialisée (3) et la plaque de montage (5) étant suffisamment proches l'une de l'autre pour qu'une coopération des composants mobiles des détecteurs (13, 23) avec les composants fixes des détecteurs (15, 25.1, 25.2, 26.1, 26.2) soit possible en vue de détecter la position angulaire (β) de l'arbre de capteur (1).

3. Capteur de rotation selon la revendication 2, **caractérisé en ce que** la plaque de montage (5) est une plaquette de circuits imprimés qui est équipée de composants de détecteurs (15, 25.1, 25.2, 26.1, 26.2) et de moyens (6) pour interpréter les signaux des détecteurs.

4. Capteur de rotation selon la revendication 1, **caractérisé en ce que** le relais à lame souple (25.1, 25.2) au nombre d'un au moins est disposé dans le champ magnétique d'au moins un aimant permanent (26.1, 26.2) sur la plaque de montage (5) et ce champ magnétique peut être interrompu par un volet d'occultation magnétique (23) disposé sur la mesure matérialisée (3).

5. Capteur de rotation selon la revendication 4, **caractérisé en ce que** deux relais à lame souple (25.1, 25.2) sont disposés sur la plaque de montage (5), chacun dans le champ d'un aimant permanent (26.1, 26.2), les deux relais à lame souple (25.1, 25.2) étant écartés de la même distance par rapport à l'axe de rotation (4) et formant un angle droit par rapport à l'axe de rotation (4).

6. Capteur de rotation selon la revendication 4 ou 5, **caractérisé en ce que** le volet d'occultation magnétique (23) est conformé comme une moitié d'anneau faite d'un matériau ayant une perméabilité magnétique suffisante pour que le volet d'occultation (23) interrompe le champ magnétique de l'aimant permanent (26.1, 26.2) au nombre d'un au moins vis-à-vis du relais à lame souple (25.1, 25.2) au nombre d'un au moins.

7. Capteur de rotation selon l'une ou l'ensemble des revendications 1 à 6, **caractérisé en ce qu'**il comporte un compte-tours dont la somme peut être établie à partir des impulsions fournies par le deuxième détecteur.

8. Procédé de fabrication d'un capteur de rotation selon la revendication 3, **caractérisé en ce que** la plaquette de circuits imprimés est équipée selon la technique *chip on board* ou la technique des composants montés en surface.

FIG. 1

FIG. 4

9

FIG. 2

FIG. 3